# EUROPEAN PATENT APPLICATION

(11) **EP 4 579 415 A1**
(43) Date of publication of application: **02.07.2025**
(21) Application number: 23915842.1
(22) Date of filing: 29.12.2023
(51) Int. Cl.: G06F 3/0482, G06F 3/048

(54) **DISPLAY METHOD, DISPLAY APPARATUS, AND ELECTRONIC DEVICE**

(30) Priority: 12.01.2023 CN 202310072062
(71) Applicant: Huawei Technologies Co., Ltd., Shenzhen, Guangdong 518129 (CN)
(72) Inventor: MAO, Jiangping, Shenzhen, Guangdong 518129 (CN); ZHOU, Yaoying, Shenzhen, Guangdong 518129 (CN); LIU, Yangyang, Shenzhen, Guangdong 518129 (CN); XIA, Haiqin, Shenzhen, Guangdong 518129 (CN)
(74) Representative: Grünecker Patent- und Rechtsanwälte PartG mbB
(86) International application number: PCT/CN2023/143194
(87) International publication number: WO 2024/149089

(57) **Abstract**

Embodiments of this application provide a display method, a display apparatus, and an electronic device. The display method includes: receiving a first input used to expand an n^{th} level of menu in a multi-level menu; and displaying a first user interface control in a transparent window in response to the first input, where the first user interface control is the n^{th} level of menu in the multi-level menu. According to the display method, the display apparatus, and the electronic device provided in embodiments of this application, overheads and power consumption of displaying the multi-level menu can be reduced.

## Description

This application claims priority to Chinese Patent Application No. 202310072062.2, filed with the China National Intellectual Property Administration on January 12, 2023 and entitled "DISPLAY METHOD, DISPLAY APPARATUS, AND ELECTRONIC DEVICE", which is incorporated herein by reference in its entirety.

### TECHNICAL FIELD

Embodiments of this application relate to the field of electronic devices, and more specifically, to a display method, a display apparatus, and an electronic device.

### BACKGROUND

A multi-level menu can accommodate a large quantity of options for a user to select, and therefore is widely applied to mainstream operating systems.

A main implementation solution of a current multi-level menu is to trigger creation of a new window by using an event, to accommodate a new level of menu. However, because creating a window is resource-intensive each time and power consumption of a device is increased, high performance load is caused for a device with a low configuration.

### SUMMARY

Embodiments of this application provide a display method, a display apparatus, and an electronic device, to reduce overheads and power consumption of displaying a multi-level menu.

According to a first aspect, a display method is provided, applied to an electronic device, and including: receiving a first input used to expand an n^{th} level of menu in a multi-level menu; and displaying a user interface control in a transparent window in response to the first input, where the user interface control is the n^{th} level of menu in the multi-level menu.

In this embodiment, a user performs the first input in a first window, where the first input may be a user input used to expand the n^{th} level of menu in the multi-level menu, n is a positive integer, and the n^{th} level of menu may be a first level of menu, or may be another level of menu above the first level of menu. When the n^{th} level of menu is the first level of menu, the first input may be, for example, a click input on a control in the first window, or the first input may be, for example, a mouse right-click input on a blank area in the first window (where a touch input may correspond to a touch and hold tap input in the first window). The first window is a window on which the user input is performed when the first level of menu is expanded. When the n^{th} level of menu is another level of menu above the first level of menu, the first input may be a hover input or a click input of the user on an option of an (n-1)^{th} level of menu. The transparent window is dedicated to displaying the multi-level menu in a form of the user interface control. The transparent window is invisible, and the multi-level menu in the form of the user interface control is visible. In this way, because various levels of menus in the multi-level menu are user interface controls, instead of creating a new window each time one level of menu is expanded, overheads and power consumption of displaying the multi-level menu can be reduced. In addition, because the multi-level menu is the user interface control in the transparent window instead of a control in the first window, and a size and a location of the transparent window may be freely set based on a requirement, display of the multi-level menu is not limited to the first window, so that display effect is better, and user experience is improved.

With reference to the first aspect, in some implementations of the first aspect, the first input is used to expand the first level of menu in the multi-level menu, the first input is located in the first window, and before the displaying a user interface control in a transparent window, the method further includes: creating the transparent window on the first window based on the first input.

In this embodiment, when the first input is used to expand the first level of menu in the multi-level menu, the first input is located in the first window, and the multi-level menu is triggered by the user by clicking the control or performing a right-click on the blank area in the first window. Before the first level of menu is expanded, the electronic device creates the transparent window on the first window, and "on" means that a z level of the transparent window is higher than that of the first window. Therefore, the multi-level menu is displayed at a top layer (with a highest z level and on the first window) as the user interface control in the transparent window. The transparent window is created to display the multi-level menu.

With reference to the first aspect, in some implementations of the first aspect, the method further includes: determining an input hot area of the multi-level menu, where the input hot area is a set of areas occupied by various levels of menus that are expanded in the multi-level menu; receiving a second input of the user on the transparent window; and when the second input is located inside the input hot area, performing, on the multi-level menu based on the second input, an operation corresponding to the second input; or when the second input is located outside the input hot area and the second input is a click input, closing the multi-level menu and the transparent window based on the second input, and activating a window with a highest z level under the transparent window at a location of the second input based on the second input.

In this embodiment, because the transparent window is displayed at the top layer, when the input of the user is within a range of the transparent window, the transparent window is a window on which the input is directly performed, but the transparent window is created to accommodate the user interface control of the multi-level menu, and except the expanded multi-level menu, another part of the window is invisible to the user. To manage the input of the user on the transparent window, the input hot area needs to be determined. The input hot area is an area set formed by the expanded multi-level menu, and a user input in this area is used for the multi-level menu, for example, used to expand or collapse the multi-level menu. For example, when the user clicks or hovers over an option of a current level of menu, a next level of menu may be expanded. When the user hovers over or clicks an option of a previous level of menu of the current level of menu, the current level of menu may be expanded in another manner. When the user clicks an option corresponding to a specific instruction, the corresponding instruction may be triggered. When the user performs an input on another area of the transparent window, and the user input is a click input, another window (a window with a highest z level under the transparent window at a location of the click input) may be activated, and the click input may simultaneously close the transparent window and the user interface control (various levels of menus in the multi-level menu) in the transparent window. In addition, in some embodiments, the click input may be directly transferred to a window under the transparent window, to trigger a corresponding instruction, for example, there is a control in the window at a click location. When the input is hovering outside the input hot area of the transparent window, another operation may not be performed. Therefore, existence of the transparent window in the technical solutions in this embodiment of this application does not affect an operation of the user.

With reference to the first aspect, in some implementations of the first aspect, an area occupied by the transparent window is greater than or equal to a possible display area of the multi-level menu.

In this embodiment, the area occupied by the transparent window is greater than or equal to the possible display area of the multi-level menu, and the possible display area of the multi-level menu includes a display area of each level of menu currently displayed on a display, and further includes a display area of any level of menu that is not displayed on the display but may be displayed. Because the multi-level menu exists in the form of the user interface control in the transparent window, the size of the transparent window needs to be sufficient to accommodate each level of menu in the multi-level menu.

With reference to the first aspect, in some implementations of the first aspect, the possible display area of the multi-level menu is related to a location of the input for triggering expansion of the first level of menu in the multi-level menu.

In this embodiment, the possible display area of the multi-level menu is related to the location of the input for triggering expansion of the first level of menu in the multi-level menu. In other words, the area occupied by the transparent window may also be related to the location of the input.

With reference to the first aspect, in some implementations of the first aspect, the area occupied by the transparent window is consistent with a screen display area of the electronic device.

In this embodiment, to reduce complexity of creating the transparent window, the transparent window may be set to be consistent with a display interface of the electronic device. In this way, regardless of an original display size of the first window, the multi-level menu triggered or managed by the first window may be displayed in an entire area of the display without being affected by a boundary of the first window. Therefore, display effect of the multi-level menu is better. For example, if the first window is small, when the multi-level menu is all displayed within a range of the first window, locations of some levels of menus in the multi-level menu may need to overlap, which affects the display effect.

With reference to the first aspect, in some implementations of the first aspect, the first window is a non-full-screen display window, and a partial area of the transparent window is outside an area occupied by the first window.

In this embodiment, when the first window is the non-full-screen display window, the partial area of the transparent window is outside the area occupied by the first window, and the multi-level menu may alternatively be displayed outside the first window, so that the display effect of the multi-level menu is better.

With reference to the first aspect, in some implementations of the first aspect, the user interface control is displayed based on a rendering result of the transparent window.

In this embodiment, when the multi-level menu is displayed, an operating system of the electronic device only needs to render the transparent window instead of rendering a window of each level of menu in the multi-level menu, so that power consumption of displaying the multi-level menu can be reduced.

With reference to the first aspect, in some implementations of the first aspect, the operating system of the electronic device is a Windows operating system, an Android operating system, an iOS operating system, or a Linux operating system.

With reference to the first aspect, in some implementations of the first aspect, when n is 1, the first input is a click operation performed by the user on a first control in the first window, or the first input is a mouse right-click operation or a touch and hold tap operation performed by the user on a blank area in the first window; and when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

When the n^{th} level of menu is the first level of menu, the first level of menu may be expanded by clicking the control or performing the right-click on the blank area in the first window. The click operation on the first control may be a mouse click (for example, a mouse right-click or a mouse left-click), or may be a touch click operation (for example, a short press click operation or a touch and hold tap operation on the first control).

When the n^{th} level of menu is a second level of menu or a menu above the second level of menu, the n^{th} level of menu may be triggered by clicking or performing mouse hovering over a specific option of the (n-1)^{th} level of menu.

According to a second aspect, a display apparatus is provided. The display apparatus includes one or more processors and one or more memories. The one or more memories store one or more computer programs, the one or more computer programs include instructions, and when the instructions are executed by the one or more processors, the display apparatus is enabled to perform the following steps: receiving a first input used to expand an n^{th} level of menu in a multi-level menu; and displaying a user interface control in a transparent window in response to the first input, where the user interface control is the n^{th} level of menu in the multi-level menu.

With reference to the second aspect, in some implementations of the second aspect, the first input is used to expand a first level of menu in the multi-level menu, the first input is located in the first window, and when the instructions are executed by the one or more processors, the display apparatus is enabled to perform the following step: creating the transparent window on the first window based on the first input.

With reference to the second aspect, in some implementations of the second aspect, when the instructions are executed by the one or more processors, the display apparatus is enabled to perform the following steps: determining an input hot area of the multi-level menu, where the input hot area is a set of areas occupied by various levels of menus that are expanded in the multi-level menu; receiving a second input of a user on the transparent window; and when the second input is located inside the input hot area, performing, on the multi-level menu based on the second input, an operation corresponding to the second input; or when the second input is located outside the input hot area and the second input is a click input, closing the multi-level menu and the transparent window based on the second input, and activating a window with a highest z level under the transparent window at a location of the second input based on the second input.

With reference to the second aspect, in some implementations of the second aspect, an area occupied by the transparent window is greater than or equal to a possible display area of the multi-level menu.

With reference to the second aspect, in some implementations of the second aspect, the possible display area of the multi-level menu is related to a location of the input for triggering expansion of the first level of menu in the multi-level menu.

With reference to the second aspect, in some implementations of the second aspect, the area occupied by the transparent window is consistent with a screen display area of the display apparatus.

With reference to the second aspect, in some implementations of the second aspect, the first window is a non-full-screen display window, and a partial area of the transparent window is outside an area occupied by the first window.

With reference to the second aspect, in some implementations of the second aspect, the user interface control is displayed based on a rendering result of the transparent window.

With reference to the second aspect, in some implementations of the second aspect, an operating system of the display apparatus is a Windows operating system, an Android operating system, an iOS operating system, or a Linux operating system.

With reference to the second aspect, in some implementations of the second aspect, when n is 1, the first input is a click operation performed by the user on a first control in the first window, or the first input is a mouse right-click operation or a touch and hold tap operation performed by the user on a blank area in the first window; and when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

According to a third aspect, a display apparatus is provided, including: a processing unit, configured to receive a first input used to expand an n^{th} level of menu in a multi-level menu; and a display unit, configured to display a user interface control in a transparent window in response to the first input, where the user interface control is the n^{th} level of menu in the multi-level menu.

With reference to the third aspect, in some implementations of the third aspect, the first input is used to expand a first level of menu in the multi-level menu, the first input is located in the first window, and the processing unit is further configured to create the transparent window on the first window based on the first input.

With reference to the third aspect, in some implementations of the third aspect, the processing unit is further configured to determine an input hot area of the multi-level menu, where the input hot area is a set of areas occupied by various levels of menus that are expanded in the multi-level menu; receive a second input of a user on the transparent window; and when the second input is located inside the input hot area, perform, on the multi-level menu based on the second input, an operation corresponding to the second input; or when the second input is located outside the input hot area and the second input is a click input, close the multi-level menu and the transparent window based on the second input, and activate a window with a highest z level under the transparent window at a location of the second input based on the second input.

With reference to the third aspect, in some implementations of the third aspect, an area occupied by the transparent window is greater than or equal to a possible display area of the multi-level menu.

With reference to the third aspect, in some implementations of the third aspect, the possible display area of the multi-level menu is related to a location of the input for triggering expansion of the first level of menu in the multi-level menu.

With reference to the third aspect, in some implementations of the third aspect, the area occupied by the transparent window is consistent with a screen display area of the electronic device.

With reference to the third aspect, in some implementations of the third aspect, the first window is a non-full-screen display window, and a partial area of the transparent window is outside an area occupied by the first window.

With reference to the third aspect, in some implementations of the third aspect, the user interface control is displayed based on a rendering result of the transparent window.

With reference to the third aspect, in some implementations of the third aspect, an operating system of the display apparatus is a Windows operating system, an Android operating system, an iOS operating system, or a Linux operating system.

With reference to the third aspect, in some implementations of the third aspect, when n is 1, the first input is a click operation performed by the user on a first control in the first window, or the first input is a mouse right-click operation or a touch and hold tap operation performed by the user on a blank area in the first window; and when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

According to a fourth aspect, an electronic device is provided. The electronic device includes the display apparatus according to any one of the second aspect or the implementations of the second aspect and the display apparatus according to any one of the third aspect or the implementations of the third aspect.

According to a fifth aspect, a computer storage medium is provided. When computer instructions are run on an electronic device, the electronic device is enabled to perform the method according to any one of the first aspect or the implementations of the first aspect.

According to a sixth aspect, an electronic device is provided, and includes: a memory, configured to store computer instructions; and a processor, configured to execute the computer instructions stored in the memory, to enable the electronic device to perform the method according to any one of the first aspect or the implementations of the first aspect.

According to a seventh aspect, a chip system is provided, and includes at least one processor. When program instructions are executed in the at least one processor, the at least one processor is enabled to perform the method according to any one of the first aspect or the implementations of the first aspect.

According to an eighth aspect, a chip is provided. The chip includes a processor and a data interface. The processor reads, through the data interface, instructions stored in a memory, to perform the method according to any one of the first aspect or the possible implementations of the first aspect.

Optionally, in an implementation, the chip may further include the memory, and the memory stores the instructions.

The processor is configured to execute the instructions stored in the memory, and when the instructions are executed, the processor is configured to perform the method according to any one of the first aspect or the possible implementations of the first aspect.

The chip may be specifically a field programmable gate array or an application-specific integrated circuit.

### BRIEF DESCRIPTION OF DRAWINGS

FIG. 1 is a diagram of a hardware structure of an electronic device applicable to embodiments of this application;
FIG. 2 is a diagram of a software architecture of an electronic device applicable to embodiments of this application;
FIG. 3 is a diagram of a graphical user interface for displaying a multi-level menu;
FIG. 4 is a schematic flowchart of a display method according to an embodiment of this application;
FIG. 5(a), FIG. 5(b), and FIG. 5(c) show a graphical user interface according to an embodiment of this application;
FIG. 6 is a diagram of different expansion manners of a multi-level menu according to an embodiment of this application;
FIG. 7(a), FIG. 7(b), and FIG. 7(c) show a graphical user interface according to an embodiment of this application;
FIG. 8 is a block diagram of a display apparatus according to an embodiment of this application; and
FIG. 9 is a block diagram of another display apparatus according to an embodiment of this application.

### DESCRIPTION OF EMBODIMENTS

The following describes technical solutions in embodiments of this application with reference to the accompanying drawings.

Terms used in the following embodiments are merely intended to describe particular embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A method provided in embodiments of this application is applied to an electronic device, and the electronic device includes but is not limited to a mobile phone, a tablet computer, a vehicle-mounted device, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart screen, and another electronic device having a display. A specific type of the electronic device is not limited in embodiments of this application.

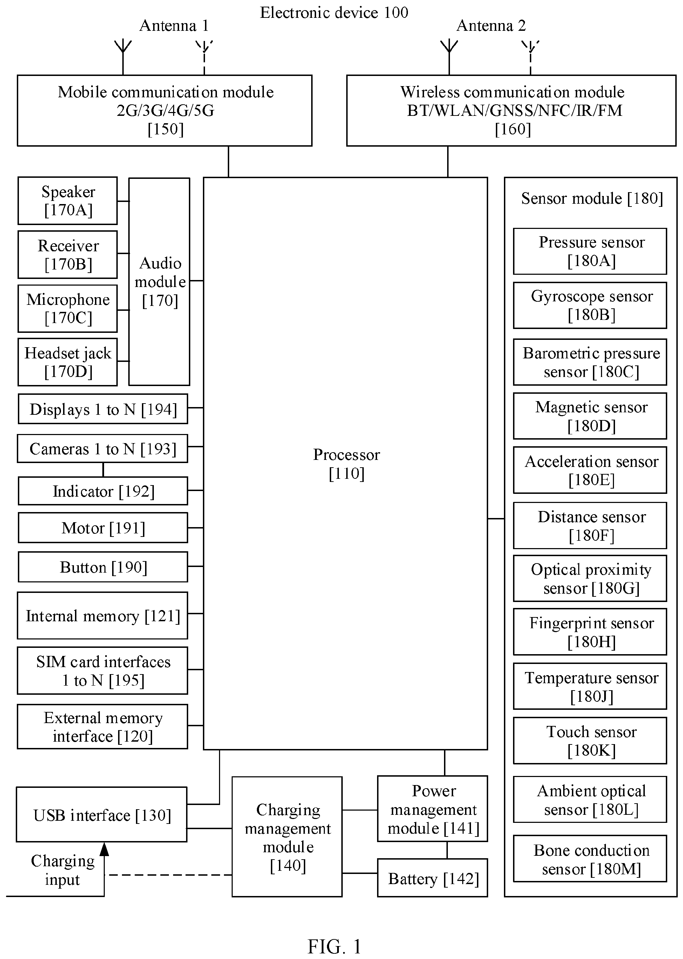

For example, FIG. 1 is a diagram of a hardware structure of an electronic device according to an embodiment of this application.

As shown in FIG. 1, an electronic device 100 may include a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 191, a display 192, a button 193, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory, to avoid repeated access and reduce waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 110 may communicate with a touch sensor 180E through the I2C bus interface, to implement a touch function of the electronic device 100. The processor 110 may communicate with the camera 191 through the CSI interface, to implement a photographing function of the electronic device 100. The processor 110 may communicate with the display 192 through the DSI interface, to implement a display function of the electronic device 100.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from a charger. The power management module 141 is configured to connect to the battery 142. When charging the battery 142, the charging management module 140 may further supply power to the electronic device 100 through the power management module 141. The power management module 141 may be further configured to monitor a parameter such as a battery capacity, a quantity of battery cycles, and a battery health status.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

The electronic device 100 may implement a display function through the GPU, the display 192, the application processor, and the like. The GPU is a microprocessor for image processing, and is connected to the display 192 and the application processor. The GPU is configured to: perform mathematical and geometric computation, and render an image. The processor 110 may include one or more GPUs that execute program instructions to generate or change display information.

The display 192 is configured to display an image, a video, and the like. The display 192 includes a display panel. The display panel may be a liquid crystal display (liquid crystal display, LCD), an organic light emitting diode (organic light emitting diode, OLED), an active-matrix organic light emitting diode (active-matrix organic light emitting diode, AMOLED), a flexible light emitting diode (flex light emitting diode, FLED), a mini-LED, a micro-LED, a micro-OLED, a quantum dot light emitting diode (quantum dot light emitting diodes, QLED), or the like. In some embodiments, the electronic device 100 may include one or N displays 192, where N is a positive integer greater than 1.

The electronic device 100 may implement a photographing function through the ISP, the camera 191, the video codec, the GPU, the display 192, the application processor, and the like. The ISP is configured to process data fed back by the camera 191. The camera 191 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 100 may include one or N cameras 191, where N is a positive integer greater than 1.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The memory 120 is configured to store data and/or instructions.

The memory 120 may include an internal memory. The internal memory is configured to store computer-executable program code, and the executable program code includes instructions. The processor 110 performs various function applications and data processing of the electronic device 100 by running the instructions stored in the internal memory. The internal memory may include a program storage area and a data storage area. The program storage area may store an operating system. The program storage area may further store one or more applications (for example, a gallery or a contact) and the like. The data storage area may store data (for example, an image or a contact) or the like created during use of the electronic device 100. In addition, the internal memory may include a high-speed random access memory, and may further include a non-volatile memory, for example, one or more disk storage devices, a flash device, or a universal flash storage (universal flash storage, UFS). In some embodiments, the processor 110 may run the instructions stored in the internal memory and/or the instructions stored in the memory disposed in the processor 110, to enable the electronic device 100 to perform the card sharing method provided in embodiments of this application.

The memory 120 may further include an external memory, for example, a micro SD card, to extend a storage capability of the electronic device 100. The external memory may communicate with the processor 110 through an external memory interface, to implement a data storage function. For example, files such as music and videos are stored in the external memory.

The electronic device 100 may implement an audio function, for example, audio playing and recording, through the audio module 170, the speaker 170A, the receiver 170B, the microphone 170C, the headset jack 170D, the application processor.

The sensor module 180 may include a pressure sensor 180A, a gyroscope sensor 180B, an acceleration sensor 180C, a distance sensor 180D, a touch sensor 180E, some other sensors, and the like.

The pressure sensor 180A is configured to sense a pressure signal, and can convert the pressure signal into an electrical signal. In some embodiments, the pressure sensor 180A may be disposed on the display 192. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 192, the electronic device 100 detects touch operation intensity through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an application icon "Messages", an instruction for viewing an SMS message is executed. When a touch operation whose touch operation intensity is greater than or equal to the first pressure threshold is performed on the application icon "Messages", an instruction for creating a new SMS message is executed.

The gyroscope sensor 180B is also referred to as an angular velocity sensor, and may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. The gyroscope sensor 180B may be further used in a navigation scenario and a motion-sensing game scenario. For example, a gyroscope can completely monitor displacement of a hand of a player, to implement various game operation effect, such as switching from a landscape mode to a portrait mode and racing game turning.

The acceleration sensor 180C may detect a value of acceleration of the electronic device 100 in all directions (usually on three axes), and may detect a value and a direction of gravity when the electronic device 100 is static. The acceleration sensor 180C may be further configured to identify a posture of the electronic device 100, and is used in an application such as switching between a landscape mode and a portrait mode or a pedometer.

The distance sensor 180D is configured to measure a distance. The electronic device 100 may measure a distance in an infrared or a laser manner. In some embodiments, in a photographing scenario, the electronic device 100 may measure a distance by using the distance sensor 180D, to implement quick focusing.

The touch sensor 180E is also referred to as a "touch panel." The touch sensor 180E may be disposed on the display 192, and the touch sensor 180E and the display 192 form a touchscreen, which is also referred to as a "touch screen". The touch sensor 180E is configured to detect a touch operation performed on or near the touch sensor. The touch sensor may transfer the detected touch operation to the application processor to determine a type of the touch event. A visual output related to the touch operation may be provided through the display 192. In some other embodiments, the touch sensor 180E may alternatively be disposed on a surface of the electronic device at a location different from a location of the display 192.

It should be understood that, in this embodiment of this application, a type of a sensor included in the sensor module 180 is not limited. The sensor module 180 may include more or fewer sensors. This may be specifically determined based on an actual requirement, and details are not described herein.

The button 193 includes a power button, a volume button, and the like. The button 193 may be a mechanical button, or may be a touch button. The electronic device 100 may receive a button input, and generate a button signal input related to a user setting and function control of the electronic device 100.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented as hardware, software, or a combination of software and hardware.

The diagram of the possible hardware structure of the electronic device 100 is described above. A software system of the electronic device 100 may use a layered architecture, an event-driven architecture, a microkernel architecture, a micro service architecture, or a cloud architecture. In this embodiment of this application, an Android^{®} system with a layered architecture is used as an example to illustrate a software architecture of the electronic device 100.

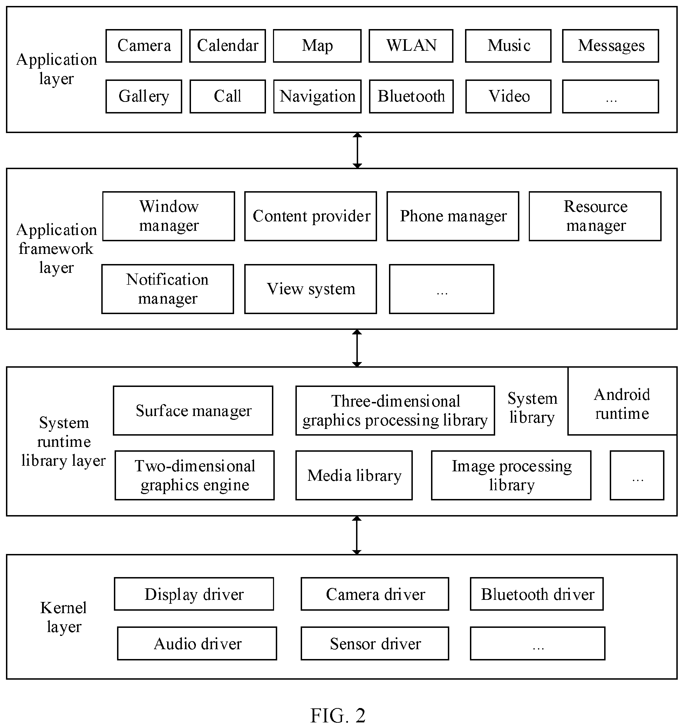

FIG. 2 is a block diagram of a software architecture of an electronic device according to an embodiment of this application. As shown in FIG. 2, software is divided into several layers in a layered architecture, and each layer has a clear role and task. The layers communicate with each other through a software interface. In some embodiments, the Android^{®} system is divided into four layers: an application layer, an application framework layer, a system runtime library layer, and a kernel layer from top to bottom. A hardware layer is below the kernel layer.

The application layer may include a series of application (application, APP) packages. As shown in FIG. 2, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions. As shown in FIG. 2, the application framework layer may include a window manager, a content provider, a phone manager, a resource manager, a notification manager, a view system, a card service engine, and the like.

The window manager is configured to manage a window program. The window manager may obtain a size of the display, determine whether there is a status bar, perform screen locking, take a screenshot, and the like. For example, the window manager may obtain a size of a to-be-displayed window on the electronic device 100, determine content in the to-be-displayed window, and the like. It should be understood that the to-be-displayed window on the electronic device 100 may include a window that is being displayed in an interface of the electronic device 100, and may further include a window of one or more applications running in a background of the electronic device 100.

The window manager is a service (service), and is a global, unique, and separate C++ service independent of applications in a system. The window manager is shared by all applications. A window management system is based on a client/server (client/service, C/S) mode. The entire window system includes two parts: a server (service) and a client (client). The client is an application that is responsible for requesting to create and use a window. The server is a window manager service (window manager service or WindowManagerService, WMS) that is responsible for maintaining and displaying the window, and the like. The client does not directly interact with the window manager service, but directly interacts with a local object window manager (window manager or WindowManager). Then, the window manager (WindowManager) interacts with the window manager service (WindowManagerService). The interaction is transparent to the application, and the application is unaware of existence of the window manager service.

A window is a rectangular area on a screen, and may display a user interface (user interface, UI) and interact with a user. In some embodiments, the window may alternatively hide the user interface (that is, an operation interface of software), and quickly present application navigation and a function operation to the user when the user needs to perform an operation, or expand the operation interface of the application again based on a triggered instruction. From a perspective of the system, the window is actually a surface (surface). There may be a plurality of windows on a screen. A layout and a sequence of the plurality of windows, and window animation are managed by the window manager service WMS, and a plurality of pieces of surface content are mixed and displayed by a SurfaceFlinger service. Windows are hierarchical. A higher-level window covers a lower-level window. A z level may represent a stacking relationship between windows, and a window with a larger z level (a higher z level) covers a window with a smaller z level (a lower z level).

The content provider is configured to store and obtain data, and enable the data to be accessed by an application. The data may include a video, an image, an audio, calls that are made and answered, a browsing history and bookmarks, an address book, and the like.

The phone manager is configured to provide a communication function for the electronic device 100, for example, management of a call status (including answering, hanging up, or the like).

The resource manager provides various resources for an application such as a localized character string, an icon, an image, a layout file, and a video file.

The notification manager enables an application to display notification information in a status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is played, the terminal device vibrates, or an indicator light blinks.

The view system includes visual controls, such as a control for displaying a text and a control for displaying an image. The view system may be configured to construct an application. A display interface may include one or more views. For example, a display interface including an SMS message notification icon may include a text display view and an image display view.

The system runtime library layer (libraries) may be divided into two parts: a system library and an Android runtime.

The Android runtime (Android runtime) is an Android runtime environment and includes a core library and a virtual machine. The Android runtime is responsible for scheduling and management of an Android system. The kernel library includes two parts: a performance function that needs to be invoked by Java language and a kernel library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library is a support of an application framework, and may include a plurality of functional modules, for example, a surface manager (surface manager), a media library (media libraries), a two-dimensional graphics engine (for example, SGL), a three-dimensional graphics processing library (for example, OpenGL ES), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software, and is configured to provide essential functions of an operating system, such as file management, memory management, process management, and a network protocol stack. The kernel layer includes at least a display driver, a camera driver, an audio driver, a sensor driver, a Bluetooth driver, and the like.

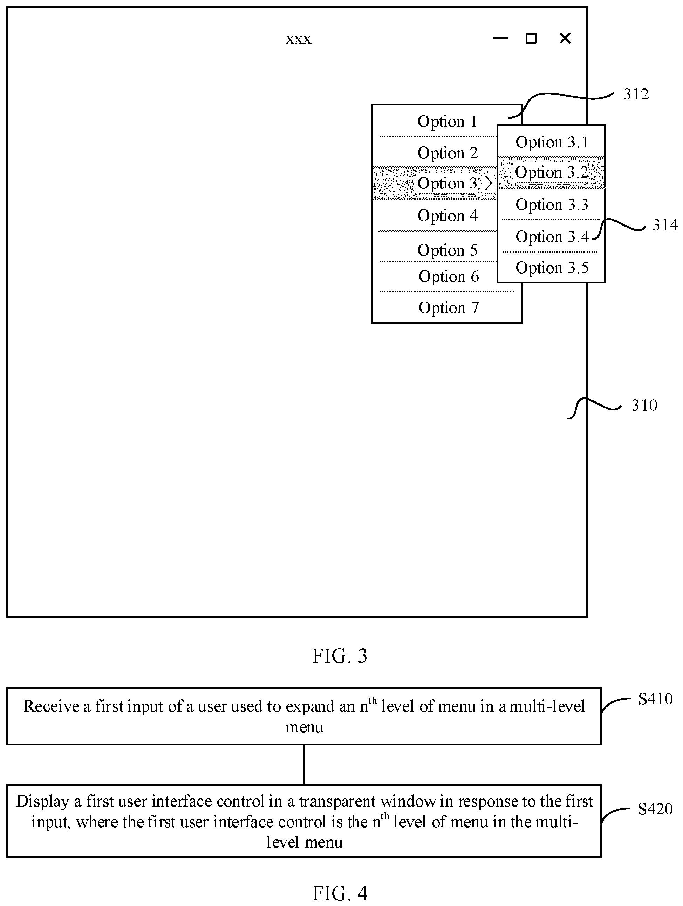

A multi-level menu including a plurality of levels of menus can accommodate a large quantity of options for a user to select, and therefore is widely applied to terminal devices. As shown in FIG. 3, in a window 310, the user may perform a right-click operation to trigger starting of a window 312. The window 312 includes a first level of menu in a multi-level menu. When the user clicks or performs mouse hovering over an option 3 of the first level of menu, starting of a window 314 is triggered, and the window 314 includes a second level of menu in the multi-level menu. Each time the user triggers a next level of menu, an electronic device needs to create a new window to accommodate the next level of menu. Creating the new window is resource-intensive each time. Therefore, when there are a large quantity of levels of menus, a large quantity of resources are consumed to display the multi-level menu.

In view of this, an embodiment of this application provides a display method. The display method may be applied to an electronic device. The electronic device may have the structures shown in FIG. 1 and FIG. 2. The display method can be used to reduce resources consumed when a multi-level menu is created and displayed, and improve user experience. As shown in FIG. 4, the method includes the following steps.

S410: Receive a first input used to expand an n^{th} level of menu in the multi-level menu.

S420: Display a user interface control in a transparent window in response to the first input, where the user interface control is the n^{th} level of menu in the multi-level menu.

In S410, n is a positive integer. When n is 1, the first input is a user input for triggering starting of the multi-level menu (expanding a first level of menu). For example, the first input may be a mouse right-click on a blank area in a first window, a mouse left-click or right-click on a menu control in a window interface, a gesture input in a window, or touch and hold (a touch input) in a window. The electronic device may predict a display area of the multi-level menu based on a location of the first input of a user.

When the first input is a click on a menu control in the first window, if a location of the menu control is preset and the user is not allowed to move the menu control, because the location of the menu control is determined, an area in which the multi-level menu appears after the user clicks the menu control (a possible display area of the multi-level menu) is also determined. If the user may adjust the location of the menu control, an adjusted location of the menu control is determined, and an area in which the multi-level menu appears after the user clicks the menu control (a possible display area of the multi-level menu) is also determined. In addition, the location of the menu control in the first window may change with a display status (a full screen and a non-full screen, and a specific size of the non-full screen) of the first window.

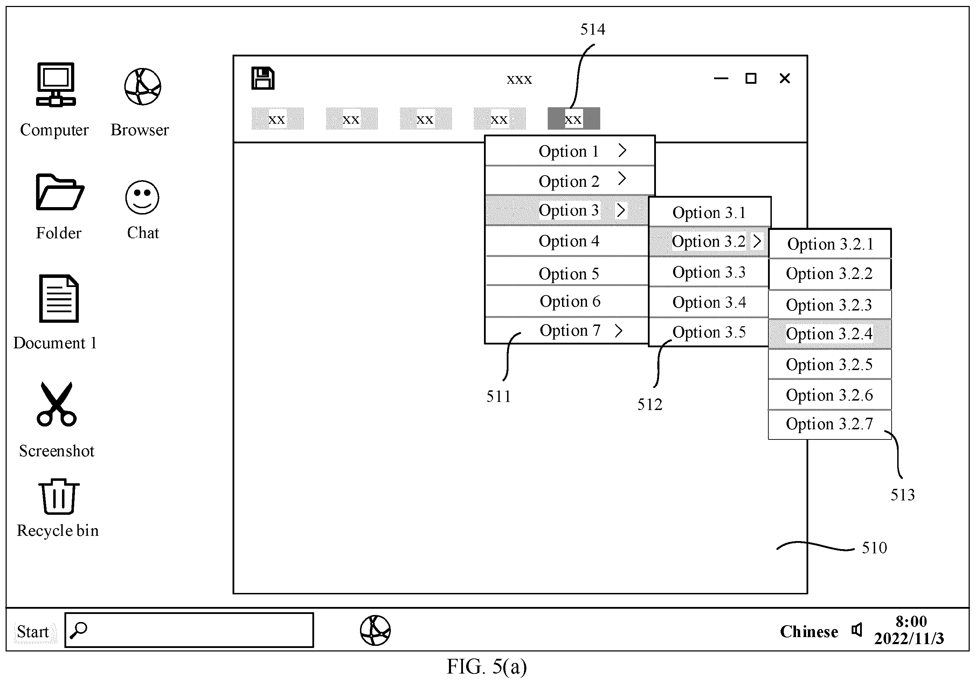

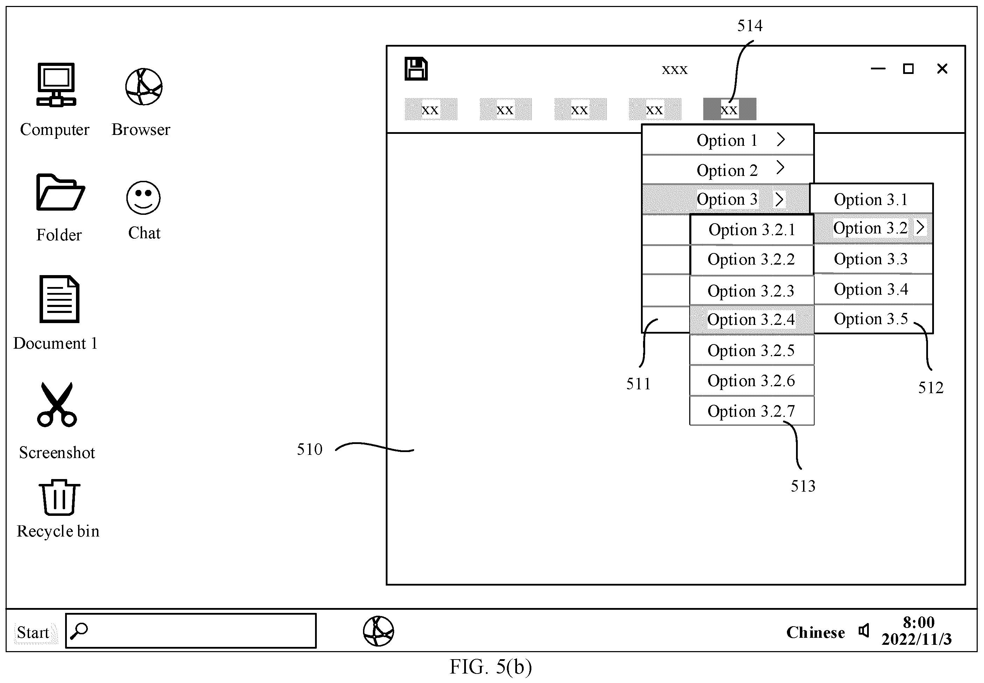

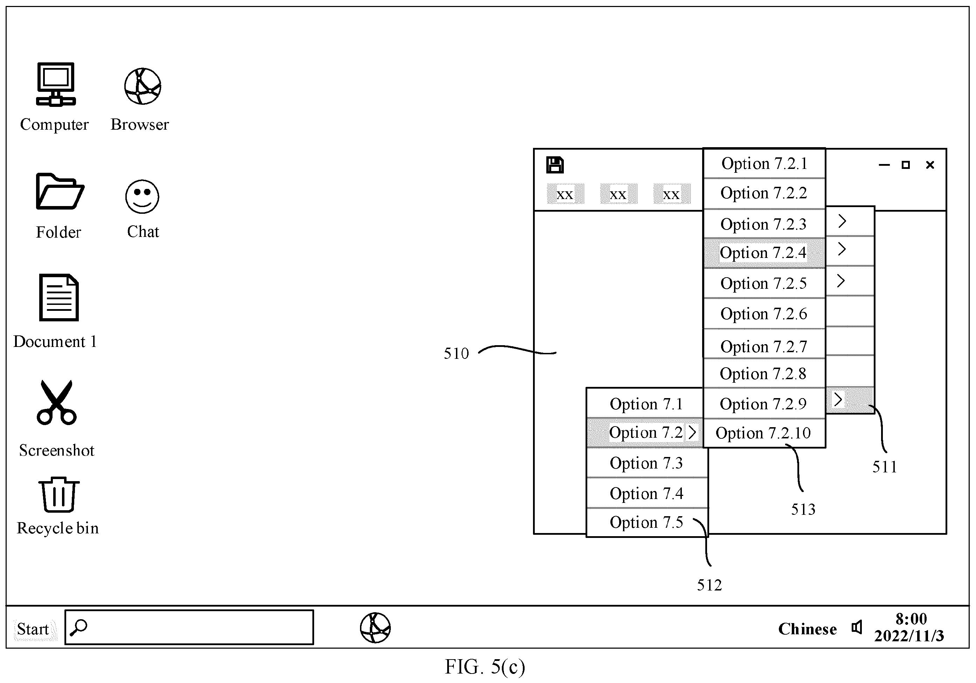

When the user clicks the menu control, the electronic device may determine a distance between the menu control and each boundary of a display interface of a display, and determine a display manner of each level of menu in the multi-level menu based on the distance. An example in which the multi-level menu is a three-level menu is used. When a boundary of the display interface of the display does not affect expansion of the multi-level menu, to improve user experience, a default expansion manner may be set as follows: A first option of a next level of menu is aligned with a selected option of a current level of menu, and the next level of menu is displayed on a right side of the current level of menu. FIG. 5(a), FIG. 5(b), and FIG. 5(c) show a graphical user interface according to an embodiment of this application. As shown in FIG. 5(a), when the user performs mouse hovering over an option 3 or clicks the option 3 of a first level of menu 511, a second level of menu 512 is expanded, and a first option 3.1 of the second level of menu 512 is aligned with the option 3 for triggering expansion of the second level of menu. When the user performs mouse hovering over or clicks an option 3.2 of the second level of menu 512, a third level of menu 513 is expanded, and a first option 3.2.1 of the third level of menu 513 is aligned with the option 3.2 for triggering expansion of the third level of menu 513.

When a boundary of the display interface of the display affects expansion of the multi-level menu, for example, when rightward expansion of the multi-level menu is affected by a right boundary of the display interface of the display, at least one level of menu in the multi-level menu may be expanded leftward. In other words, a next level of menu is displayed on a left side of a previous level of menu. As shown in FIG. 5(b), after the second level of menu 512 is displayed, a distance between a right side of the second level of menu and the right boundary of the display is short, and the third level of menu cannot be displayed on the right side of the second level of menu. In this case, the third level of menu may be displayed on a left side of the second level of menu.

When expansion of the multi-level menu is affected by a lower boundary of the display interface of the display, a selected option of a current level of menu may be aligned with a last option of a next level of menu when the next level of menu is expanded. As shown in FIG. 5(c), after the first level of menu 511 is expanded, when the user performs mouse hovering over an option 7 or clicks the option 7 (where the option 7 in the figure is blocked by the third level of menu 513), due to impact of the right boundary of the display interface of the display, the second level of menu 512 is displayed on a left side of the first level of menu 511. When the user performs mouse hovering over or clicks an option 7.2 of the second level of menu, due to impact of the lower boundary of the display interface of the display, a first option 7.2.1 of the third level of menu cannot be aligned with the selected option 7.2 of the second level of menu. In this case, a last option 7.10 of the third level of menu may be aligned with the selected option 7.2 of the second level of menu, so that each level of menu in the multi-level menu may be displayed within a range of the display interface of the display.

When the multi-level menu is expanded in different manners (where different expansion manners are brought by selecting different options, for example, an option 1, an option 2, the option 3, and the option 7 of the first level of menu can all be used to trigger expansion of the second level of menu, which are different expansion manners of the second level of menu), the foregoing different expansion modes may be used. For example, a selected option of the current level of menu is aligned with a first option or a last option of the next level of menu (or the selected option of the current level of menu may be aligned with another option of the next level of menu or a middle location of the next level of menu), and the next level of menu is displayed on a right side, a left side, or the like of the current level of menu. The multi-level menu is triggered based on a click on a menu control 514 in a window 510. When the window 510 is in a full-screen mode, in a non-full-screen mode, and in different window sizes of the non-full-screen mode, a distance between the menu control 514 and the boundary of the display interface of the display may be determined by the electronic device. In this way, expansion modes of the multi-level menu in different expansion manners and display areas of the multi-level menu in different expansion manners are further determined.

When the multi-level menu is triggered based on a click performed by the user on a blank area (where the blank area may be an area without a control in the window 510) in the window 510, there is a correspondence between the first level of menu in the multi-level menu and a click location when the user performs a click at different locations. For example, an upper left corner, a lower left corner, an upper right corner, a lower right corner, or another reference point of the first level of menu may coincide with the click location. The electronic device may determine, in a manner similar to that described above, a distance between the click location and the boundary of the display interface of the display, further determine a display mode of each level of menu, and finally determine a display area when the multi-level menu is expanded in different expansion manners.

In other words, when receiving the first input of the user, the electronic device may predict the possible display area of the multi-level menu based on the location of the first input.

When n is greater than or equal to 2, because the first input is used to expand the second level of menu or a menu above the second level of menu in the multi-level menu, and the first level of menu has been expanded before, the possible display area of the multi-level menu may still be determined in the manner described above.

In S420, the electronic device may display the user interface control in the transparent window in response to the first input, where the user interface control is the n^{th} level of menu in the multi-level menu. In other words, when the user expands any level of menu in the multi-level menu, each level of menu is displayed in a form of a user interface control in the transparent window. In this way, when the multi-level menu is displayed, an operating system of the electronic device only needs to render a layer of the transparent window to which the multi-level menu belongs, so that power consumption caused by displaying the multi-level menu can be reduced.

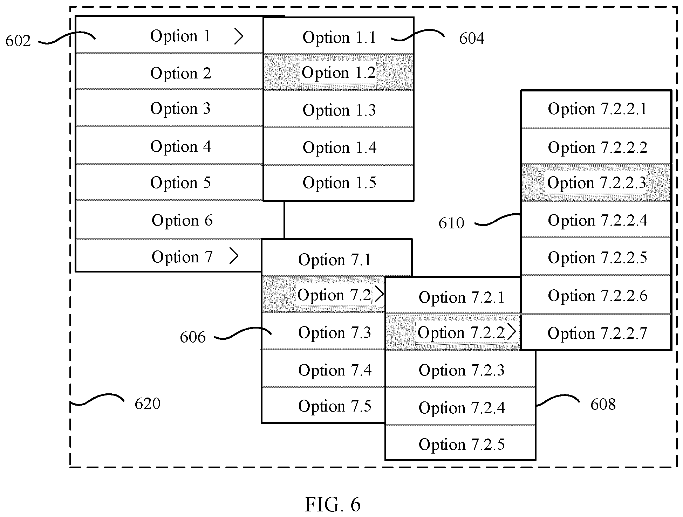

If the first input is used to expand the first level of menu, the electronic device first creates the transparent window on the first window based on the first input, and a z level of the transparent window is the highest (higher than that of the first window). In some embodiments, because the electronic device may predict the display area of the multi-level menu based on the location of the input for triggering the first level of window, a size of the transparent window may be reduced as much as possible on the premise that the generated transparent window covers the possible display area of the multi-level menu. For example, an area of the transparent window is equal to or slightly greater than the possible display area of the multi-level menu. For example, a boundary of the transparent window may be extended by several pixels (at most extended to a boundary of a screen display area of the electronic device) relative to a boundary of the possible display area of the multi-level menu. In this case, the area occupied by the created transparent window is related to the location of the input for triggering expansion of the first level of menu. In some other embodiments, to reduce complexity, the electronic device may directly set a size of the area of the transparent window to be the same as a size of the screen display area of the electronic device. FIG. 6 shows two expansion manners of a multi-level menu. An expansion manner 1 includes two levels of menus: a first level of menu 602 and a second level of menu 604 formed by further expanding an option 1, including an option 1.1 to an option 1.5. An expansion manner 2 includes four levels of menus. An option 7 of the first level of menu 602 is further expanded to form a second level of menu 606, an option 7.2 of the second level of menu 606 is further expanded to form a third level of menu 608, and an option 7.2.2 of the third level of menu is further expanded to form a fourth level of menu 610. In other words, the size of the transparent window may enable various levels of menu to be displayed within a range of the transparent window when the multi-level menu is expanded in different manners, that is, the area occupied by the transparent window is greater than or equal to the possible display area of the multi-level menu.

After the transparent window is generated, the first level of menu in the multi-level menu may be displayed to the user in the form of the user interface control in the transparent window. Although the transparent window is invisible, the multi-level menu generated in the form of the user interface control in the transparent window is visible.

The multi-level menu is expanded level by level based on an input of the user. After the user performs an input on the first window to expand the first level of menu, the z level of the generated transparent window is the highest (when the multi-level menu is not all collapsed). Therefore, when a location of a subsequent user input is within the range of the transparent window, the user input is directly performed on the transparent window. In this embodiment of this application, the electronic device further determines an input hot area of the multi-level menu in real time, and the input hot area is a set of areas occupied by various levels of menus that are expanded in the multi-level menu. When receiving the user input within the range of the transparent window, the electronic device may further determine a location of the input, when the location of the input is inside the input hot area, determine that the user input is performed on the multi-level menu, and therefore determine, based on the user input, whether to invoke a function of a corresponding option, expand a next level of menu, or collapse one or more levels of menus. When the location of the input is outside the input hot area, for example, when the input is a click input, the input may be used to activate another window. In this case, the electronic device may correspondingly activate the another window under the transparent window (a window with a highest z level under the transparent window at a click location), and close the transparent window and the multi-level menu in the transparent window, so that the transparent window generated for the multi-level menu does not bring adverse impact on user experience. In addition, in some operating systems, the click input may be directly transferred to a corresponding window, and an application corresponding to the window determines whether to further execute another instruction. For example, the click location can trigger a corresponding instruction or invoke a corresponding function (when there is a control in the window at the click location, or the like).

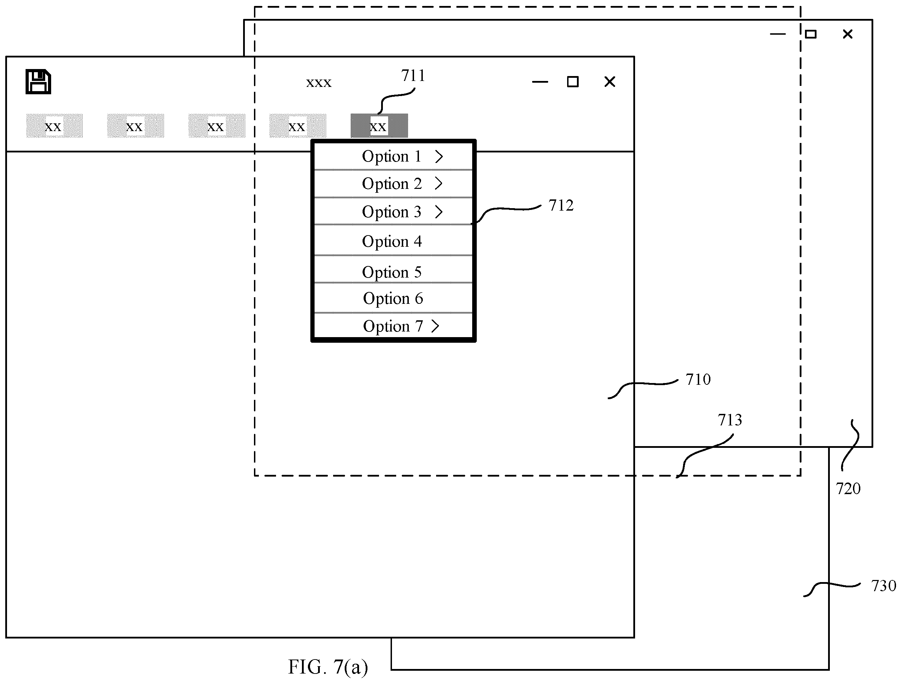

As shown in FIG. 7(a), FIG. 7(b), and FIG. 7(c), FIG. 7(a) to FIG. 7(c) are successively diagrams of expanded graphical user interfaces (graphics user interface, GUI) of a first level of menu, a second level of menu, and a third level of menu in a multi-level menu. When a user clicks a control 711 in FIG. 7(a), a transparent window 713 and a first user interface control are triggered to be generated. The first user interface control is the first level of menu in the multi-level menu. In this case, it may be determined, based on the first level of menu currently displayed to the user, that an input hot area is shown by a thick box 712. If a subsequent input of the user is within a range of the input hot area, it may be determined that the input is for the multi-level menu, the user input may be correspondingly transferred to an application of a first window 710 corresponding to the multi-level menu, and the application determines whether the user input is used to expand a second level of menu, or is used to invoke a function corresponding to a corresponding option, or is used to collapse a specific level of menu in the multi-level menu.

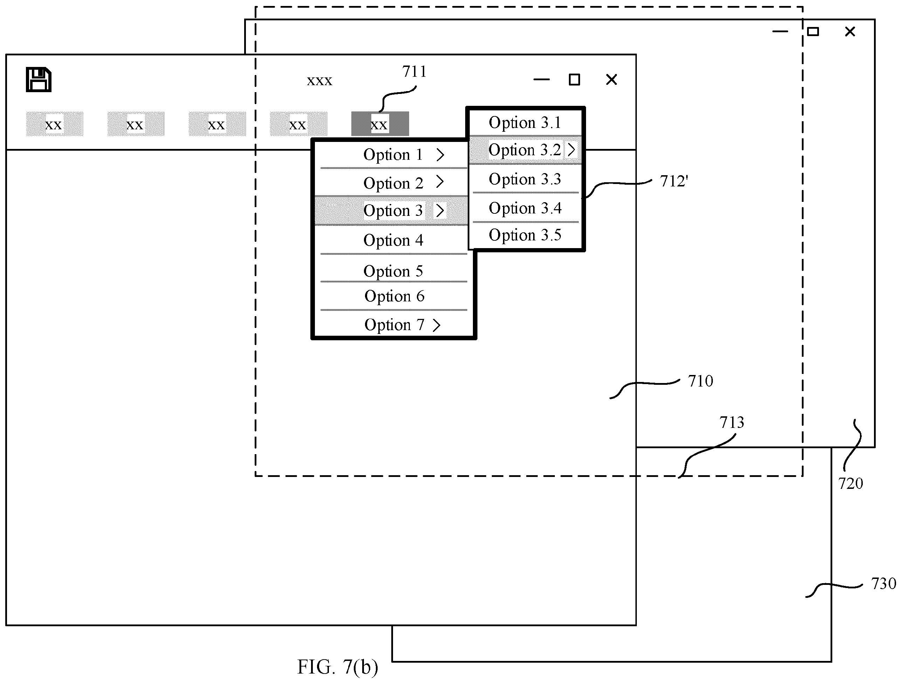

For example, as shown in FIG. 7(b), the user input may be within the range of the input hot area 712, the user input may be a click input on an option 3 of the first level of menu or mouse hovering over the option 3 whose time exceeds a preset threshold, and the user input may be transferred to the application to which the window 710 belongs. The application determines that an objective of the input is to trigger starting of a next level of menu, and a user interface control corresponding to the next level of menu may be generated. In addition, the input hot area is updated to a thick box 712' as the second level of menu is displayed, and is a combined area of areas occupied by the two levels of menus.

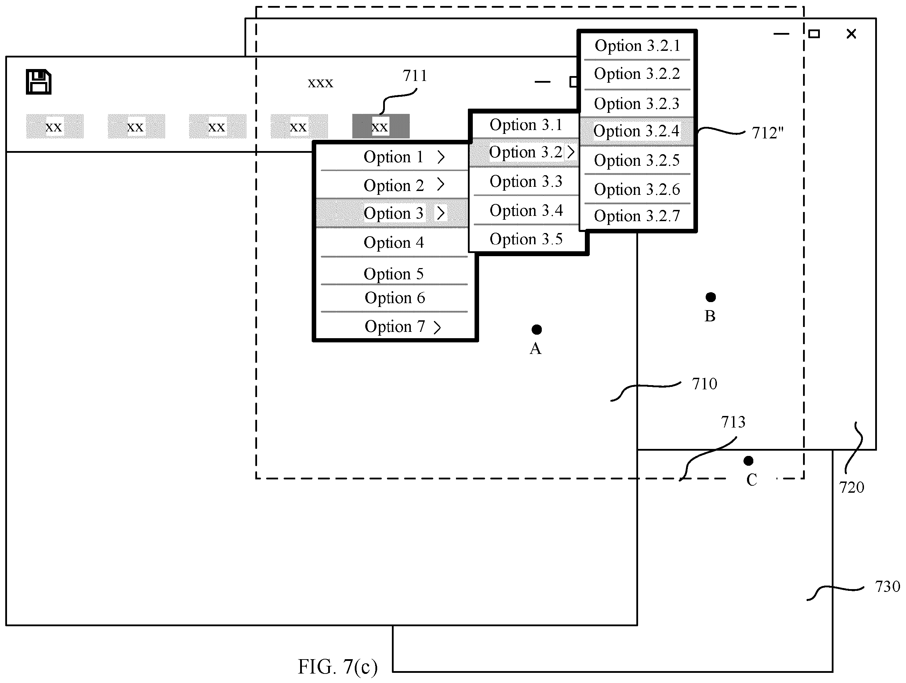

Then, the user may continue to click an option 3.2 of the second level of menu or perform mouse hovering over the option 3.2 for more than preset time, to trigger expansion of a third level of menu, and the input hot area is accordingly updated to 712" shown in FIG. 7(c).

When the user input is outside the input hot area, a type of the user input may be determined based on a location of the user input, to perform a specific operation. As shown in FIG. 7(c), for example, the user input is a click input. When a location of the click input is at a point A, because a window under the transparent window at the location of the point A is the window 710, the input can activate the window 710. In some embodiments, the electronic device may transfer the input to the application of the window 710. When a location of the click input is at a point B, because a window under the transparent window at the location of the point B is 720, the electronic device activates the window 720 based on the click input. In some embodiments, the input may be transferred to an application of the window 720. When the click input is at a point C, because a window under the transparent window at the location of the point C is a window 730, the user input may activate the window 730. In some embodiments, the input is transferred to an application of the window 730 for further processing. In addition, if the user clicks outside the input hot area, the multi-level menu is closed, and the previously generated transparent window is also closed. In other words, when the user input outside the input hot area is a click input, the user input may be directly used to close the transparent window and the multi-level menu, and activate a window with a highest z level under the transparent window at a click location. In some embodiments, an input only after a corresponding window is activated is transferred to the window. In some other embodiments, the input for activating the window may be transferred to the corresponding window, and is further processed by an application of the window.

It should be understood that, for multi-level menus triggered in different windows or different multi-level menus triggered in a same window, the electronic device may create independent transparent windows for the multi-level menus, and transparent windows corresponding to different multi-level menus may have different sizes and locations. However, expansion and collapse of the multi-level menu and execution of a specific instruction are actually determined by an application to which a window for triggering the multi-level menu belongs. Although the multi-level menu is a user interface control in the transparent window, the multi-level menu is actually managed by the application to which the window for triggering the multi-level menu belongs.

In embodiments of this application, the multi-level menu is displayed to the user in the form of the user interface control in the transparent window, and the size of the transparent window may be determined based on a display requirement of the menu. Therefore, on one hand, display of the multi-level menu is not limited by a boundary of the first window for triggering or managing the multi-level menu, and when the size of the transparent window is set to be appropriate and the first window is a non-full-screen display window, a part of the transparent window may be outside the area occupied by the first window, and the multi-level menu may be correspondingly displayed outside the first window. When the area displayed in the first window is small, if the multi-level menu is displayed inside the first window, some levels of menus in the multi-level menu overlap, and the user cannot intuitively view expanded levels of menus, which is inconvenient for the user to perform an operation. On the other hand, because the multi-level menu is displayed in the form of the user interface control, when rendering the multi-level menu, the operating system of the electronic device needs to render only one layer of the transparent window. In combination with a case in which an independent window is used for each level of menu (where a layer of each window needs to be rendered separately), this reduces system overheads and power consumption, and improves user experience.

The technical solutions described in embodiments of this application may be applied to electronic devices using different operating systems, for example, may be applied to an electronic device using a Windows^{®} operating system, an Android^{®} operating system, a MAC^{®} operating system, a Linux^{®} operating system, or an iOS^{®} operating system, provided that the operating system needs to use the multi-level menu, display of the multi-level menu is not limited by a range of an original window when power consumption of the multi-level menu is reduced, to improve user experience.

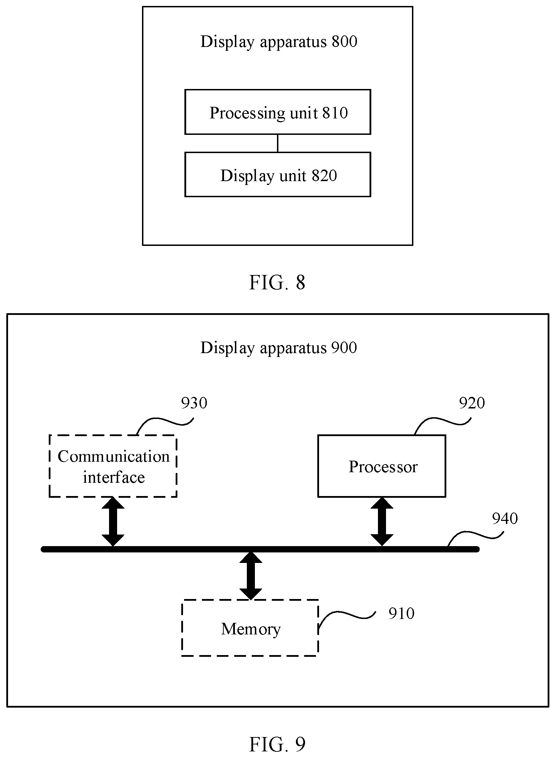

FIG. 8 shows a display apparatus 800 according to an embodiment of this application. The display apparatus 800 includes a processing unit 810 and a display unit 820. The processing unit 810 may be configured to perform step 410 in the method embodiment shown in FIG. 4. The display unit 820 may be configured to perform step S420 in the method embodiment shown in FIG. 4.

Specifically, the display apparatus 800 includes: the processing unit 810, configured to receive a first input used to expand an n^{th} level of menu in a multi-level menu; and the display unit 820, configured to display a user interface control in a transparent window in response to the first input, where the user interface control is the n^{th} level of menu in the multi-level menu.

In some embodiments, the first input is used to expand a first level of menu in the multi-level menu, the first input is located in the first window, and the processing unit is further configured to create the transparent window on the first window based on the first input.

In some embodiments, the processing unit 810 is further configured to determine an input hot area of the multi-level menu, where the input hot area is a set of areas occupied by various levels of menus that are expanded in the multi-level menu; receive a second input of a user on the transparent window; and when the second input is located inside the input hot area, perform, on the multi-level menu based on the second input, an operation corresponding to the second input; or when the second input is located outside the input hot area and the second input is a click input, close the multi-level menu and the transparent window based on the second input, and activate a window with a highest z level under the transparent window at a location of the second input based on the second input.

In some embodiments, an area occupied by the transparent window is greater than or equal to a possible display area of the multi-level menu.

In some embodiments, the possible display area of the multi-level menu is related to a location of the input for triggering expansion of the first level of menu in the multi-level menu.

In some embodiments, the area occupied by the transparent window is consistent with a screen display area of the electronic device.

In some embodiments, the first window is a non-full-screen display window, and a partial area of the transparent window is outside an area occupied by the first window.

In some embodiments, the user interface control is displayed based on a rendering result of the transparent window.

In some embodiments, an operating system of the display apparatus 800 is a Windows operating system, an Android operating system, an iOS operating system, or a Linux operating system.

In some embodiments, when n is 1, the first input is a click operation performed by the user on a first control in the first window, or the first input is a mouse right-click operation or a touch and hold tap operation performed by the user on a blank area in the first window; and when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

FIG. 9 shows a display apparatus according to an embodiment of this application. A display apparatus 900 shown in FIG. 9 may correspond to the display apparatus described above. Specifically, the display apparatus 900 may be a specific example of the display apparatus in FIG. 8. The display apparatus 900 includes a processor 920. In this embodiment of this application, the processor 920 is configured to implement a corresponding control and management operation. For example, the processor 920 is configured to support the display apparatus 900 in performing the method, operation, or function in the foregoing embodiments. Optionally, the display apparatus 900 may further include a memory 910 and a communication interface 930. The processor 920, the communication interface 930, and the memory 910 may be connected to each other or connected to each other through a bus 940. The communication interface 930 is configured to support the display apparatus in communicating with another device and the like. The memory 910 is configured to store program code and data of the display apparatus. The processor 920 invokes the code or the data stored in the memory 910 to implement a corresponding operation. The memory 910 may be or may not be coupled to the processor. The coupling in this embodiment of this application may be an indirect coupling or a communication connection between display apparatuses, units, or modules in an electrical form, a mechanical form, or another form, and is used for information exchange between the display apparatuses, the units, or the modules.

The processor 920 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communication interface 930 may be a transceiver, a circuit, a bus, a module, or a communication interface of another type. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 9, but this does not mean that there is only one bus or only one type of bus.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, applied to an electronic device, and comprising:
receiving a first input used to expand an n^{th} level of menu in a multi-level menu; and
displaying a user interface control in a transparent window in response to the first input, wherein the user interface control is the n^{th} level of menu in the multi-level menu.

2. The method according to claim 1, wherein the first input is used to expand a first level of menu in the multi-level menu, the first input is located in the first window, and before the displaying a user interface control in a transparent window, the method further comprises:
creating the transparent window on the first window based on the first input.

3. The method according to claim 1 or 2, wherein the method further comprises:
determining an input hot area of the multi-level menu, wherein the input hot area is a set of areas occupied by various levels of menus that are expanded in the multi-level menu;
receiving a second input of a user on the transparent window; and
when the second input is located inside the input hot area, performing, on the multi-level menu based on the second input, an operation corresponding to the second input; or
when the second input is located outside the input hot area and the second input is a click input, closing the multi-level menu and the transparent window based on the second input, and activating a window with a highest z level under the transparent window at a location of the second input based on the second input.

4. The method according to any one of claims 1 to 3, wherein an area occupied by the transparent window is greater than or equal to a possible display area of the multi-level menu.

5. The method according to claim 4, wherein the possible display area of the multi-level menu is related to a location of the input for triggering expansion of the first level of menu in the multi-level menu.

6. The method according to claim 4 or 5, wherein the area occupied by the transparent window is consistent with a screen display area of the electronic device.

7. The method according to claim 2, wherein the first window is a non-full-screen display window, and a partial area of the transparent window is outside an area occupied by the first window.

8. The method according to any one of claims 1 to 7, wherein the user interface control is displayed based on a rendering result of the transparent window.

9. The method according to any one of claims 1 to 8, wherein
when n is 1, the first input is a click operation performed by the user on a first control in the first window, or the first input is a mouse right-click operation or a touch and hold tap operation performed by the user on a blank area in the first window; and
when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

10. A display apparatus, wherein the display apparatus comprises:
one or more processors; and
one or more memories, wherein
the one or more memories store one or more computer programs, the one or more computer programs comprise instructions, and when the instructions are executed by the one or more processors, the display apparatus is enabled to perform the following steps:
receiving a first input used to expand an n^{th} level of menu in a multi-level menu; and
displaying a user interface control in a transparent window in response to the first input, wherein the user interface control is the n^{th} level of menu in the multi-level menu.

11. The display apparatus according to claim 10, wherein the first input is used to expand a first level of menu in the multi-level menu, the first input is located in the first window, and when the instructions are executed by the one or more processors, the display apparatus is enabled to perform the following step:
creating the transparent window on the first window based on the first input.

12. The display apparatus according to claim 10 or 11, wherein when the instructions are executed by the one or more processors, the display apparatus is enabled to perform the following steps:
determining an input hot area of the multi-level menu, wherein the input hot area is a set of areas occupied by various levels of menus that are expanded in the multi-level menu;
receiving a second input of a user on the transparent window; and
when the second input is located inside the input hot area, performing, on the multi-level menu based on the second input, an operation corresponding to the second input; or
when the second input is located outside the input hot area and the second input is a click input, closing the multi-level menu and the transparent window based on the second input, and activating a window with a highest z level under the transparent window at a location of the second input based on the second input.

13. The display apparatus according to any one of claims 10 to 12, wherein an area occupied by the transparent window is greater than or equal to a possible display area of the multi-level menu.

14. The display apparatus according to claim 13, wherein the possible display area of the multi-level menu is related to a location of the input for triggering expansion of the first level of menu in the multi-level menu.

15. The display apparatus according to claim 13 or 14, wherein the area occupied by the transparent window is consistent with a screen display area of the display apparatus.

16. The display apparatus according to claim 11, wherein the first window is a non-full-screen display window, and a partial area of the transparent window is outside an area occupied by the first window.

17. The display apparatus according to any one of claims 10 to 16, wherein the user interface control is displayed based on a rendering result of the transparent window.

18. The display apparatus according to any one of claims 10 to 17, wherein
when n is 1, the first input is a click operation performed by the user on a first control in the first window, or the first input is a mouse right-click operation or a touch and hold tap operation performed by the user on a blank area in the first window; and
when n is greater than or equal to 2, the first input is an operation of hovering over an option of an (n-1)^{th} level of menu in the multi-level menu for more than preset duration, or the first input is a click operation on an option of an (n-1)^{th} level of menu in the multi-level menu.

19. An electronic device, comprising the display apparatus according to any one of claims 10 to 18.

20. A computer storage medium, wherein when the computer instructions are run on an electronic device, the electronic device is enabled to perform the display method according to any one of claims 1 to 9.

21. An electronic device, comprising:
a memory, configured to store computer instructions; and
a processor, configured to execute the computer instructions stored in the memory, to enable the electronic device to perform the method according to any one of claims 1 to 9.

22. A chip system, comprising at least one processor, wherein when program instructions are executed in the at least one processor, the at least one processor is enabled to perform the method according to any one of claims 1 to 9.
